(19) Europäisches Patentamt
European Patent Office
Office européen des brevets

(11) Veröffentlichungsnummer: **0 474 713 B1**

(12) # EUROPÄISCHE PATENTSCHRIFT

(45) Veröffentlichungstag der Patentschrift: **07.09.94**

(51) Int. Cl.$^5$: **C08F 220/34**, B05D 1/20, C09K 19/38, C08F 220/36

(21) Anmeldenummer: **90908522.7**

(22) Anmeldetag: **30.05.90**

(86) Internationale Anmeldenummer:
**PCT/EP90/00866**

(87) Internationale Veröffentlichungsnummer:
**WO 90/15087 (13.12.90 90/28)**

(54) **(METH)ACRYLAT-COPOLYMERISATE SOWIE IHRE VERWENDUNG IN DER NICHTLINEAREN OPTIK UND ZUR HERSTELLUNG VON LANGMUIR-BLODGETT-SCHICHTEN.**

(30) Priorität: **02.06.89 DE 3918016**

(43) Veröffentlichungstag der Anmeldung:
**18.03.92 Patentblatt 92/12**

(45) Bekanntmachung des Hinweises auf die Patenterteilung:
**07.09.94 Patentblatt 94/36**

(84) Benannte Vertragsstaaten:
**BE CH DE DK FR GB IT LI NL SE**

(56) Entgegenhaltungen:
**EP-A- 0 007 574**
**EP-A- 0 290 061**
**US-A- 4 779 961**
**EP-A- 0 090 282**
**EP-A- 0 300 418**
**US-A- 4 801 670**

(73) Patentinhaber: **BASF Aktiengesellschaft**
**Carl-Bosch-Strasse 38**
**D-67063 Ludwigshafen (DE)**

(72) Erfinder: **LICHT, Ulrike**
**Meerfeldstrasse 62**
**D-6800 Mannheim 1 (DE)**
Erfinder: **FUCHS, Harald**
**Boehlweg 32**
**D-6719 Carlsberg (DE)**
Erfinder: **FUNHOFF, Dirk**
**Panoramastrasse 3 a**
**D-6900 Heidelberg (DE)**
Erfinder: **SCHREPP, Wolfgang**
**Sitzbuchweg 114**
**D-6900 Heidelberg (DE)**
Erfinder: **SCHUPP, Hans**
**Jean-Voelker-Strasse 40**
**D-6520 Worms 1 (DE)**

EP 0 474 713 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue (Meth)Acrylat-Copolymerisate, welche nichtlinear optische Eigenschaften aufweisen und welche kristalline monomolekulare Langmuir-Blodgett-Schichten bilden können.

Außerdem betrifft die Erfindung die Verwendung der neuen (Meth)Acrylat-Copolymerisate in der nichtlinearen Optik sowie die Langmuir-Blodgett-Schichten, welche unter Verwendung der neuen (Meth)-Acrylat-Copolymerisate erhalten werden.

Darüber hinaus betrifft die Erfindung ein neues Verfahren zur einheitlichen räumlichen Ausrichtung organischer Reste.

Die nichtlineare Optik beschäftigt sich ganz allgemein mit der Wechselwirkung elektromagnetischer Felder in unterschiedlichen Stoffen und dem damit verbundenen feldabhängigen Brechungsindex in diesen Stoffen.

Ganz allgemein emittiert ein Stoff Licht, wenn in ihm Dipole schwingen, wobei die Frequenz der emittierten Lichtwelle gleich der Schwingungsfrequenz der Dipole ist. Enthalten die schwingenden Dipole mehrere Frequenzkomponenten, kommen diese alle in dem vom betreffenden Stoff emittierten Licht vor. Sofern die räumliche Ausdehnung des Stoffs größer als die Wellenlänge des emittierten Lichts ist, sollten die im Stoff schwingenden identischen Dipole möglichst in gleicher Richtung und mit einer Phasendifferenz schwingen, welche dafür sorgt, daß das von einem Volumenelement emittierte Licht nicht durch destruktive Interferenz mit dem von einem anderen Volumenelement emittierten Licht wieder gelöscht wird.

In einem polarisierbaren Stoff wird durch ein von außen angelegtes elektrisches Feld $\vec{E}$ eine makroskopische Polarisation $\vec{P}$ hervorgerufen, welche als Dipolmoment pro Volumen definiert ist.

Enthält der polarisierbare Stoff keine permanenten molekularen Dipole, resultiert das Dipolmoment und damit die makroskopische Polarisation $\vec{P}$ aus der Verschiebung der Elektronen um den Betrag $\vec{d}$ aus ihrer Ruhelage, d.h. dem Schwerpunkt der positiven Ladung, heraus. Enthält der polarisierbare Stoff dagegen permanente Dipole, ändert sich durch das angelegte elektrische Feld $\vec{E}$ das permanente Dipolmoment nach demselben Mechanismus.

Solange die Verschiebung $\vec{d}$ proportional zum elektrischen Feld $\vec{E}$ bleibt, ist auch die Polarisation $\vec{P}$ proportional zum elektrischen Feld $\vec{E}$, was in der bekannten linearen Gleichung 1

$$\vec{P} = \varepsilon_0 \chi \vec{E} \qquad \text{Gl. 1}$$

zum Ausdruck kommt. In der Gleichung 1 bezeichnet $\epsilon_0$ die absolute Dielektrizitätskonstante und $\chi$ dielektrische Suszeptibilität.

Wird das von außen angelegte elektrische Feld $\vec{E}$ verstärkt, muß naturgemäß jeder Stoff oberhalb einer für ihn spezifischen Feldstärke eine Abweichung von linearen Gesetz gemäß der Gleichung 1 zeigen. Das mechanische Analogon hierzu ist die Abweichung vom Hookschen Gesetz bei überbelastung einer Feder. Solche Abweichungen von der Linearität werden mathematisch am einfachsten durch Hinzufügen einer Parabel und höherer Potenzen der Variablen behandelt, d.h., man entwickelt die nichtlineare Funktion nach Potenzen der Variablen $\vec{E}$, woraus Gleichung 2,

$$\vec{P} = \varepsilon_0 (\chi^{(1)} \vec{E} + \chi^{(2)} \vec{E}\vec{E} + \chi^{(3)} \vec{E}\vec{E}\vec{E} \; \ldots .) \qquad \text{Gl. 2}$$

die grundlegende Gleichung der nichtlinearen Optik, resultiert. Hierin bedeutet

- $\chi^{(1)}$ die dielektrische Suszeptibilität erster Ordnung, welche letztlich für lineares optisches Verhalten des betreffenden Stoffs verantwortlich ist,
- $\chi^{(2)}$ die dielektrische Suszeptibilität zweiter Ordnung, welche das nicht lineare optische Verhalten zweiter Ordnung des betreffenden Stoffs hervorruft, und
- $\chi^{(3)}$ die dielektrische Suszeptibilität dritter Ordnung, auf welche das nichtlineare optische Verhalten dritter Ordnung des betreffenden Stoffs zurückgeht.

Sowohl $\chi^{(2)}$ als auch $\chi^{(3)}$ sind Materialkonstanten, welche von der Molekülstruktur, von der Kristallstruktur, von der Frequenz des Lichts und im allgemeinen auch von der Temperatur abhängig sind. Sie können bekanntermaßen mit Hilfe der dynamisch holographischen Methode der "Vier-Wellen-Mischung" ermittelt werden, wie sie von

- W.W. Schkunow et al. in Spektrum der Wissenschaft, Februar 1986, Seiten 92 bis 97; und

- J.P. Huignard et al. in SPIE Band 215, Recent Advances in Holography, Seiten 178 bis 182, 1980,

beschrieben wird.

Stoffe mit einer feldstärkenabhängigen dielektrischen Suszeptibilität $\chi^{(2)}$, d.h. mit nichtlinear optischen Eigenschaften zweiter Ordnung, haben eine Reihe dispersiver Prozesse, wie

- die Frequenzverdoppelung (second harmonic generation, SHG), welche die Erzeugung von Licht der verglichen mit dem eingestrahlten Licht halben Wellenlänge erlaubt;
- den elektrooptischen Effekt (Pockels-Effekt), welcher eine Änderung des Brechungsindex bei angelegtem elektrischen Feld ermöglicht, oder
- die Summen- und Differenzfrequenzmischung sowie die Frequenzmischung, welche die kontinuierliche Abstimmung von Laserlicht gestattet,

zur Folge, woraus eine Vielzahl technischer Anwendungen resultieren. Beispielhaft seien die elektrooptischen Schalter, die Frequenz- und Intensitätssteuerung in der Lasertechnik, die Holographie, die Informationsverarbeitung und die integrierte Optik genannt.

Stoffe mit einer feldstärkenabhängigen dielektrischen Suszeptibilität $\chi^{(3)}$, d.h. mit nicht linear optischen Eigenschaften dritter Ordnung, eignen sich u.a. zur Herstellung rein-optischer Schalter und damit als Wellenleiter zur Konstruktion rein-optischer Computer.

Weitere Anwendungsmöglichkeiten werden in der Publikation von

- D.R. Ulrich, "Nonlinear Optical Polymer Systems and Devices", in Molecular Crystals und Liquid Crystals, Band 180, Seiten 1 bis 31, 1988,

beschrieben. Aus diesem Artikel geht außerdem die wachsende Bedeutung von Polymeren mit nichtlinear optischen Eigenschaften hervor, von denen man sich erhofft, daß sie sich durch

- Ansprechzeiten unterhalb einer Picosekunde,
- hohe, nichtresonante Nichtlinearitäten,
- bei Gleichstrom niedrigen dielektrischen Konstanten,
- niedrigen Schaltenergien,
- einen breiten Frequenzbereich,
- eine geringe Absorption,
- die Abwesenheit von Diffusionsproblemen,
- die Möglichkeit der Resonanzverstärkung,
- ihre einfache Herstellbarkeit und Verarbeitbarkeit sowie die Möglichkeit, sie in einfacher Weise zu modifizieren,
- ihre Handhabbarkeit und Verwendbarkeit bei Raumtemperatur,
- ihre Stabilität gegenüber Umwelteinflüssen und
- ihre mechanische und strukturelle Stabilität

auszeichnen und daher Zunehmend die seit langem bekannten anorganischen und organischen kristallinen Stoffe mit nichtlinear optischen Eigenschaften verdrängen werden.

Bekanntermaßen haben diese Polymere wie alle Stoffe linear optische und nichtlinear optische Eigenschaften dritter Ordnung, wogegen die nichtlinear optischen Eigenschaften zweiter Ordnung an das Vorhandensein einer nicht-zentrosymmetrischen Molekülstruktur und/oder einer nicht-zentrosymmetrischen Molekülanordnung im Kristall gebunden sind. Außerdem muß ein Polymer eine dielektrische Suszeptibilität $\chi^{(2)}$ von mindestens $10^{-8}$, vorzugsweise $10^{-7}$ esu, aufweisen, um für die vorstehend genannten Verwendungszwecke geeignet zu sein, was hohe Anforderungen an die Molekülstruktur der Polymeren als solche, ihre Herstellbarkeit und an die einheitliche räumliche Ausrichtbarkeit der darin enthaltenen Gruppen mit nichtlinear optischen Eigenschaften zweiter Ordnung stellt. Erst wenn diese Anforderungen erfüllt sind, können die sonstigen Vorteile, welche den Polymeren zu eigen sind oder welche man sich von ihnen erhofft, nutzbringend angewandt oder realisiert werden.

(Meth)Acrylat- oder (Meth)Acrylamid-Polymerisate oder -Copolymerisate, welche mindestens ein (Meth)Acrylat und/oder (Meth)Acrylamid der allgemeinen Formel I mit nichtlinearen optischen Eigenschaften zweiter Ordnung,

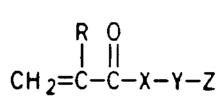

(I)

worin die Variablen die folgende Bedeutung haben:

R Wasserstoffatom oder Methylgruppe;

X gegebenenfalls vorhandener abstandshaltender flexibler Molekülteil (Spacer);

Y zweiwertige Gruppe mit Elektronendonorwirkung;
Z nicht-zentrosymmetrischer, ein leicht polarisierbares konjugiertes $\pi$-Elektronensystem sowie mindestens eine endständige Elektronenakzeptorgruppe enthaltender Rest;

einpolymerisiert enthalten, sind aus der US-A-4 755 574, der US-A-4 762 912, der EP-A-0 271 730, der WO 88/04305 und der Publikation von P. LeBarny et al., "Some new side-chain liquid crystalline polymers for non linear optics" ; in SPIE, Volume 682, Molecular and Optoelectronic Materials: Fundamentals and Applications, Seiten 56 bis 64, 1986, bekannt. Die zur Ausnutzung ihrer nichtlinear optischen Eigenschaften zweiter Ordnung notwendige einheitliche räumliche Ausrichtung der Seitengruppen wird bei diesen (Meth)-Acrylat- und (Meth)Acrylamid-Polymerisaten und -Copolymerisaten über das Aufschmelzen und das glasartige Erstarren der Polymeren, bei dem sich die Seitengruppen aufgrund ihrer flüssigkristallinen Eigenschaften räumlich einheitlich ausrichten, oder über die (Co)Polymerisation von einheitlich räumlich ausgerichteten (Co)Monomerschichten erzielt.

Aus der EP-A-0 271 730 geht des weiteren hervor, daß die darin beschriebenen (Meth)Acrylate der allgemeinen Formel I mit Vinylmonomeren wie Alkyl(meth)acrylat copolymerisiert werden können. Allerdings werden weder spezielle Alkyl (meth)acrylate genannt, noch werden die Mengen, in denen sie verwendet werden sollen, angegeben.

Die WO 89/04305 lehrt, daß die darin beschriebenen (Meth)Acrylate oder (Meth)Acrylamide der allgemeinen Formel I mit mindestens einem (Meth)Acrylat eines Alkanols mit 1 bis 20, vorzugsweise 4 bis 8, Kohlenstoffatomen im Alkylrest copolymerisiert werden können. Mengenverhältnisse werden indes nicht angegeben, und aus den Beispielen gehen lediglich Copolymerisate von 4-{2-[4-(6-Methacryloyloxyhexyloxy)-phenyl]-ethenyl}-pyridin oder 4-[4-(6-Methacryloyloxyhexyloxy)-phenyl]-pyridin mit 2-[4-(4'-Cyanobiphenyl-4-yloxycarbonyl)-phenoxy]-ethylmethacrylat hervor. Ferner enthalten die Reste Z der (Meth)Acrylate oder (Meth)Acrylamide der allgemeinen Formel I der WO 88/04305 keine endständigen Nitro-, Trifluormethyl-, Cyano- oder Fulven-6-yl-gruppen als Elektronenakzeptoren.

Kristalline monomolekulare Schichten sind gleichfalls bekannt. Sie werden von Verbindungen gebildet, welche ein polares und daher hydrophiles Molekülende und einen unpolaren und daher hydrophoben langkettigen Rest aufweisen. Verbindungen dieser Art werden allgemein auch als Amphiphile bezeichnet. Zur Schichtbildung werden die Amphiphile auf eine Wasseroberfläche aufgebracht, auf welcher sie sich ausbreiten, wobei ihr polares Ende in die wäßrige Phase eintaucht und ihr hydrophober langkettiger Rest aus der wäßrigen Phase herausragt. Werden die Verbindungen dann auf der Wasseroberfläche mittels einer Barriere zusammengeschoben, ordnen sie sich ab einem bestimmten Oberflächendruck zu einer kristallinen monomolekularen Schicht, in welcher die hydrophoben langkettigen Reste einheitlich räumlich ausgerichtet sind. Die Umwandlung in eine solche kristalline monomolekulare Schicht macht sich im Druck-Flächen-Diagramm, welches während des Zusammenschiebens der betreffenden Verbindung aufgenommen wird, durch einen kräftigen Druckanstieg bemerkbar. Dieser Druckanstieg resultiert aus dem erhöhten Widerstand, den die nun kristalline monomolekulare Schicht einer weiteren Kompression durch die Barriere entgegensetzt.

Die so hergestellte kristalline monomolekulare Schicht kann in einfacher Weise auf die Oberfläche von Trägern aufgezogen werden. Dies geschieht üblicherweise durch Eintauchen der Träger in die wäßrige Phase und Wiederherausziehen, wodurch die kristalline monomolekulare Schicht von der Wasseroberfläche auf die Trägeroberfläche übertragen wird, wobei z.B. bei hydrophoben Oberflächen wie reinen Siliciumflächen die unpolaren Molekülenden der Verbindungen an der Trägeroberfläche haften. Ist diese Übertragung vollständig, spricht man allgemein von einem übertragungsverhältnis von 1.

Auf die Oberfläche der auf dem Träger befindlichen kristallinen monomolekularen Schicht kann mindestens eine weitere Schicht dieser Art aufgezogen werden. üblicherweise wird dabei diese weitere kristalline monomolekulare Schicht auf der ersten so aufgetragen, daß die polaren Molekülenden der Verbindungen beider Schichten aneinander zugekehrt sind. Diese räumliche Anordnung wird auch als "Kopf-Kopf-Schwanz-Schwanz"-Orientierung oder als "Y-deposition" bezeichnet. Bringt man auf diese Doppelschicht eine dritte Schicht auf, ordnet sie sich in entsprechender Weise so an, daß ihre hydrophoben langkettigen Reste den betreffenden Resten der zweiten Schicht zugewandt sind, wogegen ihre polaren Molekülenden nach außen weisen.

Haben die Verbindungen, aus welchen diese kristallinen monomolekularen Multischichten bestehen, ein permanentes Dipolmoment, dann resultiert aufgrund der "Y-deposition" nur bei einer ungeraden Anzahl von übereinanderliegenden Schichten eine makroskopische Polarisation P, welche auch nur auf die oberste der Schichten zurückgeht. Bei einer geraden Anzahl resultiert naturgemäß eine makroskopische Polarisation P von Null, weil sich die Dipolmomente der einzelnen Schichten aufgrund ihrer gegenseitigen Ausrichtung aufheben.

Will man dagegen bei einer in "Y-deposition" aufgetragenen kristallinen monomolekularen Multischicht die maximal mögliche makroskopische Polarisation P zumindest angenähert erzielen, müssen zwischen die einzelnen Schichten aus Verbindungen mit einem permanenten Dipol kristalline monomolekulare Schichten aus Verbindungen ohne Dipolmoment in "Y-deposition" eingelagert werden, wodurch eine alternierende Schichtfolge resultiert, in der alle vorhandenen permanenten Dipole einheitlich ausgerichtet sind.

Bekanntermaßen werden sowohl die kristallinen monomolekularen Monoschichten als auch die entsprechenden Multischichten als "Langmuir-Blodgett-Schichten" bezeichnet. Das Verfahren zu ihrer Herstellung sowie die hierzu verwendeten Apparaturen werden üblicherweise unter dem stehenden Fachbegriff "Langmuir-Blodgett-Technik" zusammengefaßt. Der Kürze halber werden im folgenden nur noch diese Fachbegriffe verwendet.

Langmuir-Blodgett-Schichten, welche von (Meth)Acrylat-Copolymerisaten mit flüssigkristallinen, nichtlinear optische Eigenschaften aufweisenden Seitengruppen gebildet werden, sind aus der Publikation von M.M. Carpenter et al., "The Characterization of Langmuir-Blodgett Films of a Non-Linear Optical, Side Chain Liquid Crystalline Polymer", in Thin Solid Films, Band 161, Seiten 315 bis 324, 1988, bekannt. Hierbei handelt es sich indes nicht um Copolymerisate eines (Meth)Acrylats der allgemeinen Formel I mit Alkyl(meth)acrylaten, sondern um das nachstehend aufgeführte Copolymerisat:

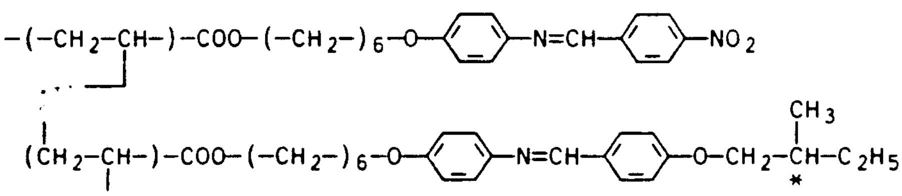

Die Seitengruppen dieses Copolymerisats lassen sich zwar mittels der Langmuir-Blodgett-Technik einheitlich räumlich ausrichten, indes ist das Copolymerisat nicht in einfacher Weise erhältlich.

Die bislang bekannten (Meth)Acrylat-Copolymerisate und Langmuir-Blodgett-Schichten erfüllen noch nicht in völlem Umfang die Anforderungen, welche von der Praxis an die Herstellbarkeit und die einheitliche räumliche Ausrichtbarkeit von Polymeren mit nichtlinear optischen Eigenschaften zweiter Ordnung gestellt werden. Mit den bislang bekannten (Meth)Acrylat-Copolymerisaten können daher die vorstehend genannten Vorteile, welche man sich von Polymeren mit nichtlinearen optischen Eigenschaften erhofft, noch nicht in dem Ausmaß und der Zuverlässigkeit realisiert werden, wie sie für die technische Anwendung unabdingbar notwendig sind.

Aufgabe der vorliegenden Erfindung ist es, neue (Meth)Acrylat-Copolymerisate bereitzustellen, welche die Nachteile des Standes der Technik nicht mehr länger aufweisen und deren nichtlinear optische Eigenschaften zweiter Ordnung aufweisende Seitengruppen sich in einfacher und zuverlässiger Weise einheitlich räumlich ausrichten lassen, so daß die neuen (Meth)Acrylat-Copolymerisate als nichtlinear optische Materialien in nichtlinear optischen Anordnungen verwendet werden können.

Überraschenderweise konnte diese Aufgabe im wesentlichen dadurch gelöst werden, daß man (Meth)-Acrylate und/oder (Meth)Acrylamide der vorstehend aufgeführten allgemeinen Formel I in bestimmten definierten Molverhältnissen mit mindestens einem (Meth)Acrylat eines Alkanols mit 10 bis 30 Kohlenstoffatomen im Alkylrest copolymerisiert und hiernach die resultierenden Copolymerisate mittels der Langmuir-Blodgett-Technik zu Langmuir-Blodgett-Schichten formt.

Demnach handelt es sich bei dem Gegenstand der Erfindung um (Meth)Acrylat-Copolymerisate, welche

(A) mindestens ein (Meth)Acrylat und/oder (Meth)Acrylamid der allgemeinen Formel I mit nichtlinear optischen Eigenschaften zweiter Ordnung,

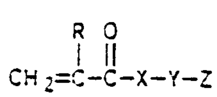

(I)

worin die Variablen die folgende Bedeutung haben:

- R Wasserstoffatom oder Methylgruppe;
- X gegebenenfalls vorhandener abstandshaltender flexibler Molekülteil (Spacer);
- Y zweiwertige Gruppe mit Elektronendonorwirkung;
- Z nicht-zentrosymmetrischer, ein leicht polarisierbares konjugiertes $\pi$-Elektronensystem sowie

mindestens eine endständige Nitro-, Trifluormethyl-, Cyano- oder Fulven-6-yl-Gruppe als Elektronenakzeptorgruppe enthaltander Rest;

und

B) mindestens ein (Meth)Acrylat eines Alkanols mit 10 bis 30 Kohlenstoffatomen in Alkylrest

im Molverhältnis (A):(B) von 1:0,5 bis 1:5 einpolymerisiert enthalten.

Im Hinblick auf den eingangs Zitierten Stand der Technik war es nicht zu erwarten gewesen, daß sich die erfindungsgemäßen (Meth)Acrylat-Copolymerisate,welche einfach herstellbar sind und außerdem die für die Anwendung notwendige hohe dielektrische Suszeptibilität zweiter Ordnung von $\chi^{(2)} > 10^{-8}$ bis $10^{-7}$ esu haben, auch noch in besonders einfacher Weise einheitlich räumlich ausrichten lassen, ohne daß hierzu auf schwer herstellbare Seitengruppen mit flüssigkristallinen Eigenschaften oder auf Verfahren zur zwangsweisen einheitlichen räumlichen Ausrichtung zurückgegriffen werden muß.

Die erfindungsgemäßen (Meth)Acrylat-Copolymerisate enthalten die (Meth)Acrylate und/oder (Meth)-Acrylamide (A) der allgemeinen Formel I mit nichtlinear optischen Eigenschaften zweiter Ordnung und die (Meth)Acrylate (B) in einem Molverhältnis (A):(B) von 1:0,5 bis 1:5 als einpolymerisierte wiederkehrende Einheiten.

Es ist möglich, Molverhältnisse (A):(B) von größer als 1:0,5, etwa 1:0,4 bis 1:0,1 zu verwenden, indes lassen sich die seitenständigen Reste oder Seitengruppen -CO-X-Y-Z oder -CO-Y-Z der (Meth)Acrylate oder der (Meth)Acrylamide (A) der allgemeinen Formel I dann manchmal nicht mehr zuverlässig einheitlich räumlich ausrichten.

Wählt man dagegen Molverhältnisse (A):(B) von kleiner als 1:5, etwa 1:6 bis 1:20, können die nichtlinear optischen Eigenschaften der betreffenden (Meth)Acrylat-Copolymerisate manchmal nicht allen Ansprüchen der Praxis in vollem Umfang gerecht werden.

Demnach handelt es sich bei dem erfindungsgemäß zu verwendenden Molverhältnis (A):(B) von 1:0,5 bis 1:5 um einen optimalen Bereich, innerhalb dessen die Molverhältnisse frei wählbar sind und den jeweils verwendeten (Meth)Acrylaten und/oder (Meth)Acrylamiden (A) und den (Meth)Acrylaten (B) sowie dem jeweiligen Verwendungszweck in hervorragender Weise angepaßt werden können.

Innerhalb dieses optimalen Bereichs, sind die Molverhältnisse (A):(B) von 1:0,9 bis 1:4 hervorzuheben, weil aufgrund solcher Molverhältnisse erfindungsgemäße (Meth)Acrylat-Copolymerisate resultieren, welche zum einen praxisgerechte nichtlinear optische Eigenschaften zweiter Ordnung aufweisen und zum anderen sich besonders vorzüglich mittels der Langmuir-Blodgett-Technik zu Langmuir-Blodgett-Schichten formen lassen, in denen alle Seitengruppen -CO-X-Y-Z oder -CO-Y-Z der allgemeinen Formel I einheitlich räumlich ausgerichtet sind, was gerade im Hinblick auf die Verwendung der betreffenden erfindungsgemäßen (Meth)-Acrylat-Copolymerisate als nichtlinear optische Materialien essentiell ist.

Die erfindungsgemäßen (Meth)Acrylat-Copolymerisate können hierbei nur die (Meth)Acrylate und/oder die (Meth)Acrylamide (A) der allgemeinen Formel I und die (Meth)Acrylate (B) einpolymerisiert enthalten. Für spezielle Verwendungszwecke können sie indes noch weitere (Meth)Acrylat-, (Meth)Acrylamid-, Vinylaromat-, Vinylhalogenid-, Vinylester-, Vinylether-, Allylester-, Allylether-, Alken- oder Alkadien-Comonomere oder Acrylnitril einpolymerisiert enthalten. Diese Comonomeren können dichroitische Chromophore oder mesogene Grupen, d.h. Gruppen mit flüssigkristallinen Eigenschaften, tragen. Hierzu sei auf den eingangs zitierten Stand der Technik oder auf die EP-A-0 184 482, die EP-A-0 228 703, die EP-A-0 258 898, die DE-A-36 03 267 oder die DE-A-36 31 841 verwiesen, woraus solche weiteren Comonomeren hervorgehen. Sofern solche weiteren Comonomeren in den erfindungsgemäßen (Meth)Acrylat-Copolymerisaten einpolymerisiert enthalten sind, liegen sie in Molverhältnissen vor, welche die besonderen Vorteile der erfindungsgemäßen (Meth)Acrylat-Copolymerisate nicht vermindern.

Unabhängig davon, ob die erfindungsgemäßen (Meth)Acrylat-Copolymerisate weitere Comonomere einpolymerisiert enthalten, liegt das Molverhältnis (A):(B) innerhalb der vorstehend angegebenen Grenzen.

Erfindungsgemäß bevorzugt sind die erfindungsgemäßen (Meth)Acrylat-Copolymerisate, welche lediglich mindestens ein (Meth)Acrylat oder (Meth)Acrylamid (A) der allgemeinen Formel I mit nichtlinear optischen Eigenschaften zweiter Ordnung und mindestens ein (Meth)Acrylat (B) einpolymerisiert enthalten.

Beispiele geeigneter gegebenenfalls zu verwendender abstandshaltender flexibler Molekülteile (Spacer) X für die erfindungsgemäß zu verwendenden (Meth)Acrylate und/oder (Meth)Acrylamide (A) der allgemeinen Formel I mit nichtlinear optischen Eigenschaften zweiter Ordnung sind substituierte oder unsubstituierte 1-Oxaalkandiyl-Gruppen, deren Kohlenstoffketten durch Heteroatome wie Sauerstoff, Stickstoff, Phosphor oder Schwefel unterbrochen sein können. Vorteilhafterweise enthalten die 1-Oxaalkandiyl-Gruppen 2 bis 12, insbesondere 2 bis 6, Kohlenstoffatome. Beispiele besonders gut geeigneter abstandshaltender Molekülteile (Spacer) X sind 1-Oxapropan-1,3-diyl, 1-Oxabutan-1,4-diyl, 1-Oxapentan-1,5-diyl, 1-Oxahexan-1,6-diyl oder 1-Oxaheptan-1,7-diyl, von denen 1-Oxapropan-1,3-diyl und 1-Oxaheptan-1,7-diyl besonders bevorzugt sind. Häufig erweist sich auch die 1-Oxadodecan-1,12-diyl-Gruppe als ganz besonders vorteilhaft.

Beispiele geeigneter zweiwertiger Gruppen Y mit Elektronendonorwirkung für die erfindungsgemäß zu verwendenden (Meth)Acrylate und/oder (Meth)Acrylamide (A) der allgemeinen Formel I mit nichtlinear optischen Eigenschaften zweiter Ordnung sind Ether-, Thioether-, Amino- oder N-Alkylaminogruppen -N-(Alkyl)- oder die Gruppen

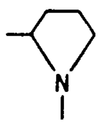 , 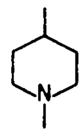 , 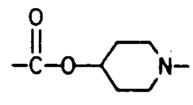 oder 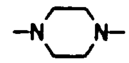 ,

von denen die Ether-, die Amino- und die N-Alkylaminogruppen, -N(Alkyl)-, insbesondere die N-Methylaminogruppe, und die Piperazin-1,4-diyl-Gruppe besonders bevorzugt sind.

Beispiele geeigneter nicht-zentrosymmetrischer, ein leicht polarisierbares konjugiertes $\pi$-Elektronensystem sowie mindestens eine endständige Elektronenakzeptorgruppe enthaltender Reste Z für die erfindungsgemäß zu verwendenden (Meth)Acrylate und/oder (Meth)Acrylamide (A) der allgemeinen Formel I mit nichtlinear optischen Eigenschaften zweiter Ordnung sind

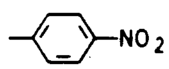 , 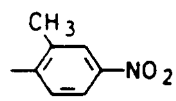 , 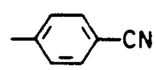 , 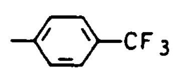 ,

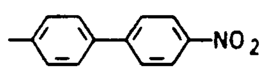 , 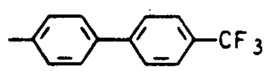 , 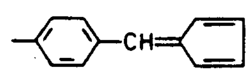 ,

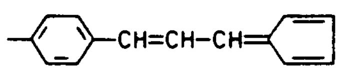 , 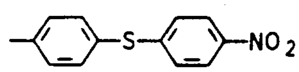 ,

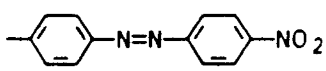 , 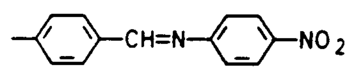 ,

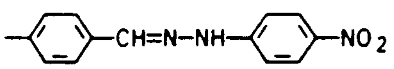 ,

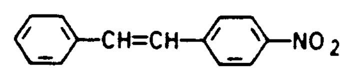 oder 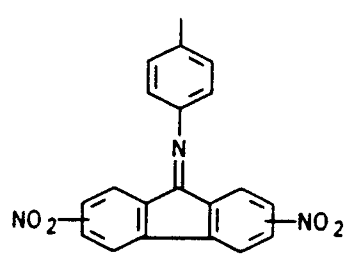 .

Beispiele gut geeigneter Reste Z sind diejenigen, welche Nitro-, Cyano-, Trifluormethyl- oder Fulven-6-yl-gruppe als endständige Elektronenakzeptorgruppe enthalten, denn die erfindungsgemäßen (Meth)Acrylat-Copolymerisate, welche mindestens ein (Meth)Acrylat Und/oder (Meth)Acrylamid (A) der allgemeinen Formel I mit einem dieser gut geeigneten Resten Z und mindestens ein (Meth)Acrylat (B) einpolymerisiert enthalten, weisen bei Molverhältnissen (A):(B) von größer als 1:0,5 und kleiner als 1:5 Eigenschaften auf, die die betreffenden erfindungsgemäßen (Meth)Acrylat-Copolymerisate auch für Anwendungszwecke außerhalb der nichtlinearen Optik auf dem Gebiet der Formteilherstellung geeignet machen.

Beispiele gut geeigneter Reste -X-Y-Z oder -Y-Z für die erfindungsgemäß zu verwendenden (Meth)-Acrylate und/oder (Meth)Acrylamide (A) der allgemeinen Formel I mit nichtlinear optischen Eigenschaften zweiter Ordnung, welche aus den vorstehend genannten Beispielen für abstandshaltende flexible Molekülteile (Spacer) X, zweiwertige Gruppen Y mit Elektronendonorwirkung und für Reste Z oder nur aus den vorstehend genannten Beispielen für Y und Z bestehen, sind aus der US-A-4 694 066 (EP-A-0 235 506), der US-A-4 762 912, der US-A-4 755 574, der WO 88/04305, der EP-A-0 271 730 oder den Publikationen von

- M.M. Carpenter et al. in Thin Solid Films, Band 161, Seiten 315 bis 324, 1988, und
- P. LeBarny et al. in SPIE, Volume 682, Molecular and Polymeric Optoelectronic Materials: Fundamentals und Applications, Seiten 56 bis 64, 1986,

bekannt.

Beispiele gut geeigneter (Meth)Acrylate und (Meth)Acrylamide (A) der allgemeinen Formel I mit nichtlinear optischen Eigenschaften zweiter Ordnung für die Herstellung der erfindungsgemäßen (Meth)-Acrylat-Copolymerisatesowie ihre Herstellung sind aus den zwei vorstehend genannten Publikationen von M.M. Carpenter et al. einerseits und P. LeBarny andererseits sowie aus der EP-A-0 271 730, der WO 88/04305, der US-A-4 762 912 oder der US-A-4 755 574 bekannt.

Beispiele besonders gut geeigneter (Meth)Acrylate und (Meth)Acrylamide (A) der allgemeinen Formel I mit nichtlinear optischen Eigenschaften zweiter Ordnung, welche mit besonderem Vorteil für die Herstellung der erfindungsgemäßen (Meth)Acrylat-Copolymerisate verwendet werden, sind 2-[N-(p-Nitrophenyl)-N-methylamino]-ethylmethacrylat und das entsprechende Acrylat 4-(p-Nitrophenylazo)-methacrylanilid und das entsprechende Acrylanilid, 11-[4-(p-Nitrophenyl)-piperazin-1-yl]-undecylmethacrylat und das entsprechende Acrylat, 4-Nitro-4'-[N-methyl-N-(11-methacryloyloxy-undec-1-yl)-amino]-azobenzol und das entsprechende Acrylat sowie 4'-[N-Methyl-N-(11-methacryloyloxy-undec-1-yl)-amino]-benzaldehyd-4-nitro-phenylhydrazon und das entsprechende Acrylat, von denen die Methacrylderivate bevorzugt sind.

Beispiele geeigneter (Meth)Acrylate (B) von Alkanolen mit 10 bis 30 Kohlenstoffatomen im Alkylrest sind n-Decyl-, n-Undecyl-, n-Dodecyl-, N-Tridecyl-, n-Tetradecyl-, n-Pentadecyl-, n-Hexadecyl-, n-Heptadecyl-, n-Octadecyl-, n-Nonadecyl-, n-Eicosanyl-, n-$C_{21}H_{43}$-, n-$C_{22}H_{45}$-, n-$C_{23}H_{47}$-, n-$C_{24}H_{49}$-, n-$C_{25}H_{51}$-, n-$C_{26}H_{53}$-, n-$C_{27}H_{55}$-, n-$C_{28}H_{57}$-, n-$C_{29}H_{59}$- oder n-$C_{30}H_{61}$-acrylat oder -methacrylat. Von diesen sind die (Meth)Acrylate (B) gut geeignet, deren Alkylesterreste (-COO-Alkyl) in etwa gleich oder gleich lang sind wie die Reste -CO-X-Y-Z oder -CO-Y-Z der (Meth)Acrylate und (Meth)Acrylamide (A) der allgemeinen Formel I, wobei die Methacrylate (B) besonders gut und n-Heptadecyl-, n-Octadecyl- und n-Nonadecylmethacrylat ganz besonders gut geeignet sind. Von den letztgenannten wird n-Octadecylmethacrylat bevorzugt verwendet.

Die erfindungsgemäßen (Meth)Acrylat-Copolymerisate haben vorzugsweise ein zahlenmittleres Molekulargewicht $\overline{M}_n$ von 1000 bis 50.000, vorzugsweise 2000 bis 20.000 und insbesondere 3000 bis 10.000. Ihre durch "Vier-Wellen-Mischung" ermittelte dielektrische Suszeptibilität zweiter Ordnung liegt oberhalb von $\chi^{(2)} = 10^{-8}$, insbesondere $10^{-7}$ esu. Es ist ein ganz besonderer Vorteil der erfindungsgemäßen (Meth)Acrylat-Copolymerisate, daß die dielektrische Suszeptibilität zweiter Ordnung $\chi^{(2)}$ in einfacher Weise durch die einheitliche räumliche Ausrichtung ihrer Seitengruppen in Langmuir-Blodgett-Mono- und Multischichten eingestellt und weiter gesteigert werden kann.

Die Herstellung der erfindungsgemäßen (Meth)Acrylat-Copolymerisate bietet methodisch keine Besonderheiten, sondern erfolgt nach den üblichen und bekannten Methoden der radikalisch initiierten Polymerisation und Copolymerisation, wie sie z.B. der US-A-4 762 912, der US-A-4 755 574, der EP-A-0 271 730, der WO 88/04305 oder den vorstehend genannten Publikationen von M.M. Carpenter et al. und von P. LeBarny et al. zu entnehmen sind.

Die erfindungsgemäßen (Meth)Acrylat-Copolymerisate eignen sich hervorragend für die Herstellung von nichtlinear optischen Materialien, welche entweder aus den erfindungsgemäßen (Meth)Acrylat-Copolymerisaten bestehen oder welche darüber hinaus noch weitere Komponenten enthalten.

Insbesondere sind die erfindungsgemäßen (Meth)Acrylat-Copolymerisate für die Herstellung von Langmuir-Blodgett-Mono- und Multischichten geeignet, welche entweder nur aus den erfindungsgemäßen (Meth)Acrylat-Copolymerisaten bestehen oder welche im Falle der Multischichten weitere in "Y-deposition" aufgetragene sonstige Langmuir-Blodgett-Schichten in alternierender Folge enthalten.

Besonders bevorzugt sind die Langmuir-Blodgett-Multischichten, welche Langmuir-Blodgett-Monoschichten aus mindestens einem der erfindungsgemäßen (Meth)Acrylat-Copolymerisate und Langmuir-Blodgett-Monoschichten aus mindestens einem polymeren Amphiphil in "Y-deposition" und in alternierender Folge enthalten.

Ein Beispiel eines besonders gut geeigneten polymeren Amphiphils ist hierbei

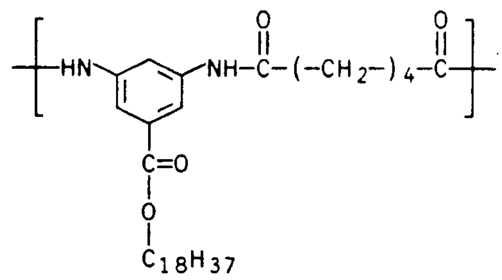

.

Die Herstellung dieser erfindungsgemäßen Langmuir-Blodgett-Mono- und Multischichten bietet methodisch keine Besonderheiten, sondern erfolgt nach der üblichen und bekannten, eingangs beschriebenen Langmuir-Blodgett-Technik.

Hierbei erweisen sich die organischen Reste oder Seitengruppen in den erfindungsgemäßen (Meth)-Acrylat-Copolymerisaten als besonders leicht einheitlich räumlich ausrichtbar, ohne daß hierzu auf schwer herstellbare Seitengruppen mit flüssigkristallinen Eigenschaften oder auf Verfahren zu ihrer zwangsweisen einheitlichen räumlichen Ausrichtung zurückgegriffen werden muß. Im Hinblick auf die Verwendung der erfindungsgemäßen (Meth)Acrylat-Copolymerisate und der erfindungsgemäßen Langmuir-Blodgett-Schichten als nichtlinear optische Materialien ist dies ein ganz besonderer Vorteil.

Sofern es bei oder nach der einheitlichen räumlichen Ausrichtung der organischen Reste in den erfindungsgemäßen (Meth)Acrylat-Copolymerisaten durch die Langmuir-Blodgett-Technik überhaupt noch notwendig ist, können die erfindungsgemäßen Langmuir-Blodgett-Mono- und -Multischichten unter Zuhilfenahme elektrischer und/oder magnetischer Felder der geeigneten Richtung und des geeigneten Vorzeichens hergestellt und/oder nach ihrer Herstellung, ggf. in diesen Feldern, üblichen und bekannten Verfahren für das Domänenwachstum, wie z.B. der Rekristallisation oder dem Zonenschmelzen, unterzogen werden.

Demgemäß eignen sich die erfindungsgemäßen (Meth)Acrylat-Copolymerisate in hervorragender Weise für die Herstellung neuer nichtlinear optischer Anordnungen, wie sie beispielsweise für die Frequenzverdoppelung, die Frequenzmischung oder für die Lichtwellenleitung verwendet werden oder wie sie in optischen Modulatoren, optischen Multiplexern, optischen logischen Bausteinen oder optischen Verstärkern vorliegen.

Diese neuen nichtlinear optischen Anordnungen enthalten mindestens einen dem entsprechenden Verwendungszweck in Form und Funktion angepaßten Träger, z.B. ein Halbleiterplättchen, und mindestens eine Schicht, insbesondere eine Langmuir-Blodgett-Schicht, welche mindestens ein erfindungsgemäßes (Meth)Acrylat-Copolymerisat enthält oder welche hieraus besteht.

Bei ihrer Verwendung in nichtlinear optischen Anordnungen offenbaren sich weitere besondere Vorteile der erfindungsgemäßen (Meth)Acrylat-Copolymerisate und der erfindungsgemäßen Langmuir-Blodgett-Schichten So hat ihre exakte zweidimensionale Ausrichtung eine gleichmäßige Dicke und die höchstmögliche Anisotropie der betreffenden Schichten zur Folge. Außerdem sind die betreffenden Schichten stabil gegenüber intensiver Laserstrahlung.

Beispiele

Beispiel 1

Herstellung eines erfindungsgemäßen Methacrylat-Copolymerisats unter Verwendung eines Methacrylamids (A) mit dem Rest -CO-Y-Z gemäß der allgemeinen Formel I und des n-Octadecylmethacrylats (B).

Versuchsvorschrift:

1. Die Herstellung von 4-(p-Nitrophenylazo)-methacrylanilid [(Meth)Acrylamid (A)]
Zu 1,71 g Methacrylsäurechlorid und 1,65 g Triethylamin in 20 ml Chloroform wurden unter Kühlen mit Eiswasser 4 g 4-Amino-4'-nitro-azo-benzol in 150 ml Chloroform zugetropft. Nach der Zugabe wurde das resultierende Reaktionsgemisch zunächst 2 Stunden bei Raumtemperatur gerührt und hiernach während 3 Stunden am Rückfluß erhitzt. Danach wurden weitere 0,85 g Methacrylsäurechlorid und 0,82 g Triethylamin in 10 ml Chloroform hinzugegeben, wonach die Reaktionsmischung während 8 Stunden am Rückfluß erhitzt wurde. Nach dem Abkühlen auf Raumtemperatur wurde überschüssiges Methacrylsäurechlorid abdestilliert. Die Produktlosung wurde mit 30 ml Chloroform verdünnt, hiernach mit 100 l Wasser versetzt und im Anschluß daran noch zweimal mit je 100 ml Wasser gewaschen. Nach dem Abtrennen der wäßrigen Phasen wurde die Produktlösung mit $Na_2SO_4$ getrocknet. Nach dem Trocknen wurde 4-(p-Nitrophenylazo)-methacrylanilid durch Verdampfen des Chloroforms isoliert und hiernach durch Säulenchromatographie an Kieselgel 60 mit Ethylacetat-Hexan im Volumenverhältnis von 3:7 als Laufmittel gereinigt. Es wurden 0,95 g des Produkts erhalten, welches die folgenden physikalischen Eigenschaften aufwies: Schmelzpunkt: 210 °C; IR-Spektrum (KBr-Pressling): Banden bei 3400, 2900, 2850, 1690, 1680, 1590, 1510, 1340, 1140, 1110 und 840 $cm^{-1}$ $^1H$-Kernresonanzspektrum (400 MHz, $CDCl_3$, Tetramethylsilan als interner Standard), chemische Verschiebung $\delta$ (in ppm): 8,37 (Doublett, 2H), 8,0 (Multiplett, 4H), 7,8 (Doublett, 2H), 7,73 (Singulett, 1H), 5,86 (Singulett, 1H), 5,55 (Singulett, 1H), 2,12 (Singulett, 3H).

2. Die Herstellung des erfindungsgemäßen Methacrylat-Copolymerisats

0,87 g n-Octadecylmethacrylat und 0,4 g 4-(p-Nitrophenylazo)-methacrylanilid wurden in 30 ml Toluol mit 0,013 g Azo-bis-isobutyronitril versetzt, wonach die resultierende Reaktionslösung 1 Stunde lang mit Stickstoff gespült wurde. Hiernach wurde die Reaktionslösung 5 Tage lang bei 70 °C gehalten, wobei alle 24 Stunden 0,013 g Azobis-isobutyronitril nachdosiert wurden. Danach wurde die Reaktionslösung eingeengt, und das Methacrylat-Copolymerisat wurde in Methanol ausgefällt, durch mehrmaliges Umfällen mit Methanol aus Toluol gereinigt und hiernach getrocknet. Es wurden 0,3 g des erfindungsgemäßen Methacrylat-Copolymerisats mit einem zahlenmittleren Molekulargewicht $\overline{M}_n$ von 5500 und einem durch Elementaranalyse bestimmten Molverhältnis (A):(B) von 1:3,9 erhalten. Das Produkt wies als Film in seinem IR-Spektrum die folgenden Banden auf: 2900, 2850, 1720, 1690, 1590, 1510, 1450, 1340, 1240, 1170 und 1140 $cm^{-1}$.

Das erfindungsgemäße Methacrylat-Copolymerisat war ausgezeichnet für die Herstellung von nichtlinear optischen Materialien und von Langmuir-Blodgett-Schichten geeignet.

Beispiel 2

Herstellung eines erfindungsgemäßen Methacrylat-Copolymerisats unter Verwendung eines Methacrylats (A) mit dem Rest -CO-X-Y-Z gemäß der allgemeinen Formel I und des n-Octadecylmethacrylats (B)

Versuchsvorschrift:

1. Die Herstellung von 2-[N-(p-Nitrophenyl)-N-methylamino]-ethanol

5,25 g N-Methylethanolamin und 11,2 g p-Nitrofluorbenzol, 9,7 g $K_2CO_3$ und 2 Tropfen Tricaprylmethylammoniumchlorid wurden in 70 ml Dimethylformamid während 3 Tage auf 95 °C erhitzt. Die resultierende Reaktionsmischung wurde auf 350 ml Wasser gegossen. Das hierbei ausgefallene Produkt wurde abgesaugt, wonach man die wäßrige Phase noch mit Toluol extrahierte. Nach der Trocknung und dem Eindampfen der toluolischen Lösung wurden die beiden Produktfraktionen vereinigt und aus Ethanol-Wasser im Volumenverhältnis von 2:1 umkristallisiert. Es wurden 10,22 g 2-[N-(p-Nitrophenyl)-N-methylamino]-ethanol mit den folgenden physikalischen Eigenschaften erhalten: Schmelzpunkt: 99-101 °C, IR-Spektrum (KBr-Pressling): Banden bei 3450, 2900, 2850, 1690, 1680, 2900, 1580, 1470, 1450, 1330, 1320, 1110, 1060 und 825 $cm^{-1}$; $^1H$-Kernresonanzspektrum (400 MHz, $CDCl_3$, Tetramethylsilan als interner Standard), chemische Verschiebung $\delta$ (in ppm): 8,05 (Doublett, 2H), 6,64 (Doublett, 2H), 3,9 (Triplett, 2H), 3,65 (Triplett, 2H), 3,15 (Singulett, 3H), 2,02 (Singulett, 1H).

2. Die Herstellung von 2-[N-(p-Nitrophenyl)-N-methylamino]-ethylmethacrylat [(Meth)Acrylat (A)]

Zu 5 g 2-[N-(p-Nitrophenyl)-N-methylamino]-ethanol und 2,02 g Pyridin in 40 ml Chloroform wurden unter Kühlen 2,67 g Methacrylsäurechlorid in 5 ml Chloroform hinzugetropft. Hiernach wurde die resultierende Reaktionslösung zuerst bei Raumtemperatur gerührt und danach während 3,5 Stunden am Rückfluß erhitzt. Nach dem Abkühlen auf Raumtemperatur wurde sie mit 40 ml Wasser versetzt, wonach man die Chloroformphase abtrennte und die wäßrige Phase dreimal mit je 20 ml Chloroform extrahierte. Nach dem Trocknen der vereinigten Chloroformphasen mit $Na_2SO_4$ und dem Abdampfen des Chloroforms wurde das hiernach resultierende Produkt mit Hexan gewaschen und im Vakuum getrocknet. Es wurden 2,6 g 2-[N-(p-Nitrophenyl)-N-methylamino]-ethylmethyacrylat erhalten, dessen IR-Spektrum als KBr-Pressling Banden bei 2950, 2900, 1720, 1600, 1510, 1490, 1320, 1310, 1160, 1110 und 825 $cm^{-1}$ aufwies.

3. Die Herstellung des erfindungsgemäßen Methacrylat-Copolymerisats

0,93 g 2-[N-(p-Nitrophenyl)-N-methylamino]-ethylmethacrylat und 1,19 g n-Octadecylmethacrylat wurden mit 0,022 g Azo-bis-isobutyronitril in 30 ml Toluol gelöst. Die Reaktionslösung wurde durch einstündiges Einleiten von Stickstoff entgast und hiernach unter Luftausschluß während 3 Tage bei 70 °C gehalten,

wobei noch zweimal 0,021 Azo-bis-isobutyronitril nachdosiert wurden. Hiernach wurde die Reaktionslösung eingeengt, wonach das Methacrylat-Copolymerisat durch Zugabe von Methanol ausgefällt wurde. Nach mehrmaligem Umfällen aus Toluol mit Methanol wurden 0,93 g des erfindungsgemäßen Methacrylat-Copolymerisats mit einem zahlenmittleren Molekulargewicht $\overline{M}_n$ von 6100 und einem durch Elementaranalyse ermittelten Molverhältnis (A):(B) von 1:1,3 erhalten. Das Produkt wies folgende physikalische Eigenschaften auf: IR-Spektrum (KBr-Pressling):
Banden bei 2900, 2860, 1720, 1595, 1510, 1490, 1320, 1160 und 1110 $cm^{-1}$; $^1$H-Kernresonanzspektrum (400 MHz, $CDCl_3$, Tetramethylsilan als interner Standard), chemische Verschiebung $\delta$ (in ppm): 8,13 (Doublett), 6,75 (Doublett), 3,93 (Multiplett, nicht aufgelöst), 3,75 (Multiplett, nicht aufgelöst), 3,1 (Singulett), 1,6 (Multiplett, nicht aufgelöst), 1,22 (Multiplett, nicht aufgelöst), 0,88 ppm (Triplett).

Das erfindungsgemäße Methacrylat-Copolymerisat war leicht zu verarbeiten, als dünner Film transparent, homogen und laserstabil und es war hervorragend für die Herstellung von Langmuir-Blodgett-Schichten geeignet.

Beispiel 3

Herstellung eines erfindungsgemäßen Methacrylat-Copolymerisats unter Verwendung eines Methacrylats (A) mit dem Rest -CO-X-Y-Z gemäß der allgemeinen Formel I und des n-Octadecylmethyacrylats (B)

Versuchsvorschrift:

1. Die Herstellung von N-(11-Hydroxyundecyl)-N'-(4-nitrophenyl)-piperazin
10 g 11-Bromundecan-1-ol, 4 g trockenes Kaliumcarbonatpulver und 8,27 g 4-Nitrophenyl-piperazin und 2 Tropfen des üblichen und bekannten Phasentransferkatalysators Aliquat® 336 wurden in 50 ml Dimethylpropylenharnstoff während 6 Stunden auf 85 °C erwärmt und hiernach 2 Tage lang stehengelassen. Die Reaktionsmischung wurde hiernach in 500 ml Wasser gegossen. Das hierbei ausfallende Rohprodukt wurde abgesaugt (erste Fraktion). Die Wasserphase wurde noch dreimal mit jeweils 50 ml Toluol und viermal mit jeweils 50 ml Essigester extrahiert. Die vereinigten Extrakte wurden eingedampft, und die hierbei zurückbleibende Rohproduktfraktion (zweite Fraktion) wurde mit der ersten Fraktion vereinigt, wonach die vereinigten Rohproduktfraktionen aus einer Mischung aus Ethanol und Wasser im Volumenverhältnis von 2:1 umkristallisiert wurden. Das umkristallisierte Produkt wurde im Vakuum getrocknet, wonach 7,8 g N-(11-Hydroxyundecyl)-N'-(4-nitrophenyl)-piperazin resultierten. Das Produkt wies die folgenden physikalischen Eigenschaften auf: Schmelzpunkt: 118 °C ; IR-Spektrum (KBr-Pressling): Banden bei 3550, 2900, 2850, 1595, 1575, 1470, 1333, 1255, 1250, 1115, 820 und 750 $cm^{-1}$; Elementaranalyse: berechnet: 66,8 % C, 9,34 % H, 11,13 % N und 12,7 % O; gefunden: 66,8 % C, 9,4 % H, 11,1 % N und 12,7 % O.
2. Die Herstellung von 11-[4-(p-Nitrophenyl)-piperazin-1-yl-]-undecylmethacrylat
Dieses Methacrylat wurde im wesentlichen wie in Beispiel 2, Ziffer 2, beschrieben hergestellt, nur daß anstelle von 2-[N-(p-Nitrophenyl)-N-methylamino]-ethanol N-(11-Hydroxyundecyl)-N'-(4-nitrophenyl)-piperazin verwendet wurde.

Die durch chemische Analyse ermittelte Elementarzusammensetzung des Produkts entsprach genau den theoretischen Berechnungen. Es wies das folgende $^1$H-Kernresonanzspektrum (400 MHz, $CDCl_3$, Tetramethylsilan als interner Standard) auf: chemische Verschiebung $\delta$ (in ppm): 1,3 - 1,65 (Multiplett, 18 H), 1,95 (Singulett, 3 H), 2,6 (Triplett, 4 H), 3,45 (Triplett, 4 H), 4,15 (Triplett, 2 H), 5,5 (Doublett, 2 H), 6,1 (Doublett, 2 H), 6,8 (Doublett, 2 H) und 8,1 (Doublett, 2 H).
3. Die Herstellung des erfindungsgemäßen Methacrylat-Copolymerisats
1 g 11-[4-(p-Nitrophenyl)-piperazin-1-yl]-undecylmethacrylat, 0,75 g n-Octadecylmethacrylat und 0,0176 g Azo-bis-isobutyronitril wurden in 25 ml analysenreinem Toluol gelöst. Die Reaktionslösung wurde durch einstündiges Einleiten von Stickstoff entgast und hiernach unter Luftausschluß während 5 Tage bei 70 °C gehalten, wobei täglich jeweils 0,0175 g Azo-bis-isobutyronitril nachdosiert wurden. Hiernach wurde die Reaktionslösung eingeengt, wonach das erfindungsgemäße Methacrylat-Copolymerisat durch Zugabe von Methanol ausgefällt wurde. Nach mehrmaligem Umfällen aus Tetrahydrofuran mit Methanol wurden 0,86 g des erfindungsgemäßen Methacrylat-Copolymerisats mit einem zahlenmittleren Molekulargewicht $\overline{M}_n$ von 7900 und einem durch Elementaranalyse ermittelten Molverhältnis (A):(B) von 1:1,03 erhalten. Die spektroskopischen Eigenschaften des erfindungsgemäßen Methacrylat-Copolymerisats entsprachen den theoretischen Erwartungen.

Das erfindungsgemäße Methacrylat-Copolymerisat war leicht zu verarbeiten, als dünner Film transparent, homogen und laserstabil und es war hervorragend für die Herstellung von Langmuir-Blodgett-Schichten geeignet.

Beispiel 4

Herstellung eines erfindungsgemäßen Methacrylat-Copolymerisats unter Verwendung eines Methacrylats (A) mit dem Rest -CO-X-Y-Z gemäß der allgemeinen Formel I und des n-Octadecylmethacrylats (B)

Versuchsvorschrift:

1. Die Herstellung von 4'-[N-Methyl-N-(11-hydroxyundecyl)-amino]-4-nitro-azobenzol
Zu 5,1 g N-Methylanilin in 5,1 g Triethylamin und 20 ml Toluol wurden bei 85 °C 12,5 g 11-Brom-undecan-1-ol in 40 ml Toluol unter Rühren zugetropft. Hiernach wurde weitere 5 Stunden bei 85 °C gerührt, wonach der resultierende Niederschlag abgesaugt wurde. Das abgetrennt Filtrat wurde eingedampft, und der Rückstand wurde im Ölpumpenvakuum getrocknet. Die hierbei erhaltenen 9,5 g N-Methyl-N-(11-hydroxyundecyl)-anilin-Rohware wurden in folgender Weise gleich weiterverarbeitet:
Bei -10 °C wurde aus 5,3 g 4-Nitroanilin und Natriumnitrit in 19 ml konzentrierter Salzsäure und 4 ml Wasser das Diazoniumsalz hergestellt. Überschüssiges Natriumnitrit wurde mit 1,9 g Harnstoff zerstört. Bei -10 °C wurde die Suspension von N-Methyl-N-(11-hydroxyundecyl)-anilin in 5,7 ml konzentrierter Salzsäure und 28,5 ml Wasser zugetropft. Die resultierende Reaktionsmischung wurde nach 45 Minuten auf Raumtemperatur erwärmt und mit Kaliumacetat auf einen pH-Wert von 4 eingestellt. Der hierbei ausfallende Niederschlag wurde nach 30 Minuten Standzeit abgesaugt und hiernach mit Wasser neutral gewaschen. Die hierbei erhaltene Rohware wurde aus einem Gemisch aus Heptan und Ethanol im Volumenverhältnis von 9:1 umkristallisiert, wobei 9,1 g 4'-[N-Methyl-N-(11-hydroxyundecyl)-amino]-4-nitroazobenzol anfielen, was einer Ausbeute von 63 % der Theorie entsprach.
2. Die Herstellung von 4-Nitro-4'-[N-methyl-N-(11-methacryloyloxy-undec-1-yl)-amino]-azobenzol
Das im Verfahrensschritt 1 erhaltene 4'-[N-Methyl-N-(11-hydroxyundecyl)-amino]-4-nitroazobenzol wurde nach der bei Beispiel 2, Ziffer 2, angegebenen Vorschrift mit Methacrylsäurechlorid zu 4-Nitro-4'-[N-methyl-N-(11-methacryloyloxy-undec-1-yl)-amino]azobenzol [Methacrylat(A)] umgesetzt. Das hierbei erhaltene Produkt wies die folgenden physikalisch chemischen Eigenschaften auf: IR-Spektrum (KBr-Pressling): Banden bei 2900, 2850, 1705, 1585, 1490, 1325, 1120, 1150, 1095, 850 und 810 $cm^{-1}$; $^1$H-Kernresonanzspektrum (400 MHz, $CDCl_3$, Tetramethylsilan als interner Standard, chemische Verschiebung $\delta$ (in ppm): 1,3 bis 1,65 (Multiplett, 18 H), 1,9 (Singulett, 3 H), 3,1 (Singulett, 3 H), 3,4 (Triplett, 2 H) 4,3 (Triplett, 2 H), 5,6 (Singulett, 1 H), 6,1 (Singulett, 1 H), 6,7 (Doublett, 2 H), 7,9 (Doublett, 4 H), 8,3 (Doublett, 2 H); Elementaranalyse: berechnet: 67,3 % C, 8,03 % H, 13,13 % N, 11,25 % O; gefunden: 66,1 % C, 7,7 % H, 13,8 % N, 12,1 % O.
3. Die Herstellung des erfindungsgemäßen Methacrylat-Copolymerisats
0,38 g 4-Nitro-4'-[N-methyl-N-(11-methacryloyloxy-undec-1-yl)-amino]-azobenzol, 0,52 g n-Octadecylmethacrylat und 0,009 g Azo-bis-isobutyronitril wurden in 16 ml analysenreinem Toluol gelöst. Die resultierende Reaktionsmischung wurde während 1 Stunde durch Einleiten von Stickstoff entgast. Danach wurde sie unter einem leichten Stickstoffstrom während 8 Stunden bei 70 °C polymerisiert. Hiernach wurden noch sechsmal jeweils 0,009 g Azo-bis-isobutyronitril nachdosiert, wobei nach jeder Nachdosierung die Reaktionsmischung während 8 Stunden bei 70 °C gehalten wurde. Im Anschluß daran wurde die Reaktionsmischung filtriert, und die im Filtrat enthaltenen Produkte wurden mit Methanol ausgefällt und abgetrennt. Das hierbei erhaltene erfindungsgemäße Methacrylat-Copolymerisat wurde mit einigen Tropfen Aceton gewaschen und danach noch zweimal aus Toluol mit Methanol umgefällt.
Es wurden 0,17 g des gereinigten erfindungsgemäßen Methacrylat-Copolymerisats erhalten. Dieses wies ein zahlenmittleres Molekulargewicht $\overline{M}_n$ von 8400 und ein durch Elementaranalyse ermitteltes Molverhältnis (A):(B) von 1:2,78 auf. Die spektroskopischen Eigenschaften des erfindungsgemäßen Methacrylat-Copolymerisats entsprachen den theoretischen Erwartungen.

Auch dieses erfindungsgemäße Methacrylat-Copolymerisat war leicht zu verarbeiten, als dünner Film transparent, homogen und laserstabil und es war hervorragend für die Herstellung von Langmuir-Blodgett-Schichten geeignet.

Beispiel 5

Herstellung eines erfindungsgemäßen Methacrylat-Copolymerisats unter Verwendung eines Methacrylats (A) mit dem Rest -CO-X-Y-Z gemäß der allgemeinen Formel I und des n-Octadecylmethacrylats (B)

Versuchsvorschrift:

1. Die Herstellung von N-Methyl-N-(11-hydroxyundecyl)-amin
Eine Mischung aus 5,8 g N-Methylformamid, 13,6 g Natronlaugepulver, 5,8 g Kaliumcarbonatpulver, 3,2 g Tetrabutylammoniumhydrogensulfat und 90 ml Dimethylpropylenharnstoff wurde 1 Stunde bei Raumtemperatur gerührt. Hiernach wurde die resultierende Mischung 20 Minunten auf 40 °C und danach auf 70 °C erhitzt. Bei dieser Temperatur wurde eine Lösung von 25 g 11-Bromundecan-1-ol in 70 ml Dimethylpropylenharnstoff zu der Mischung zugetropft. Hiernach wurde die resultierende Reaktionsmischung noch 12 Stunden bei 70 °C gerührt und danach auf 1,6 l Wasser gegossen. Die hierbei erhaltene wäßrige Phase wurde viermal mit jeweils 180 ml eines Lösungsmittelgemischs aus Ether und Essigester im Volumenverhältnis von 1:1 extrahiert. Die hierbei erhaltenen organischen Phasen wurden vereinigt, und die vereinigte organische Phase wurde dreimal mit jeweils 50 ml Wasser gewaschen und danach mit Natriumsulfat getrocknet. Nach dem Abtrennen des Natriumsulfats und dem Abdampfen der organischen Lösungsmittel wurden 20,5 g N-Methyl-N-(11-hydroxy-undecyl)-formamid erhalten, was einer Ausbeute von 91 % entsprach.

Das gesamte bisalkylierte Formamid wurde in 100 ml Methanol und 40 ml konzentrierter Salzsäure während 8 Stunden auf Rückflußtemperaturen erhitzt. Nach dem Abkühlen wurde die Reaktionsmischung mit 10 %iger Natronlauge auf einen pH-Wert von 13 eingestellt und danach dreimal mit jeweils 80 ml eines Lösungsmittelgemischs aus Ether und Essigester im Volumenverhältnis 1:1 extrahiert. Die vereinigten organischen Phasen wurden dann dreimal mit jeweils 30 ml Wasser gewaschen und danach mit Natriumsulfat getrocknet. Nach dem Abtrennen des Natriumsulfats wurde die organische Lösung eingeengt und das hierbei erhaltene N-Methyl-N-(11-hydroxyundecyl)-amin wurde aus n-Heptan umkristallisiert. Hierbei wurden 11,3 g an gereinigtem Produkt erhalten. Dieses wies als KBr-Pressling das folgende IR-Spektrum auf: Banden bei 3350, 3300, 2900, 2850, 1450, 1360, 1110 und 1050 $cm^{-1}$.

2. Die Herstellung von 4-[N-Methyl-N-(11-hydroxyundecyl)-amino]benzaldehyd
11,6 g des gemäß Ziffer 1 erhaltenen N-Methyl-N-(11-hydroxyundecyl)-amins, 8 g Kaliumcarbonatpulver, 7,18 g 4-Fluorbenzaldehyd und 2 Tropfen des üblichen und bekannten Phasentransferkatalysators Aliquat® 336 wurden in 50 ml Dimethylpropylenharnstoff während 72 Stunden bei 95 °C gerührt. Hiernach wurde die Reaktionsmischung mit 700 ml Wasser verdünnt und dreimal mit jeweils 50 ml eines Lösungsmittelgemischs aus Ether und Essigester im Volumenverhältnis 1:1 extrahiert. Die vereinigten Extrakte wurden nach dem waschen mit 3 mal 50 ml Wasser mit Natriumsulfat getrocknet und nach dem Abtrennen des Natriumsulfats eingedampft. Der hierbei erhaltene Rückstand wurde durch Trocknen im Ölpumpenvakuum bei 60 °C von unumgesetztem Benzaldehyd befreit, was dünnschichtchromatographisch überwacht wurde. Das getrocknete Produkt wurde durch Aufkochen mit Aktivkohle in Aceton gereinigt. Es wurden 12,45 g 4-[N-Methyl-N-(11-hydroxyundecyl)]-amino-benzaldehyd erhalten, dessen IR-Spektrum (KBr-Pressling) Banden bei 3400, 2900, 2850, 1660, 1580, 1520, 1460, 1440, 1380, 1310, 1240, 1160, 1050 und 820 $cm^{-1}$ aufwies.

3. Die Herstellung von 4'-[N-Methyl-N-(11-hydroxyundecyl)-amino]-benzaldehyd-4-nitro-phenylhydrazon
Eine Mischung aus 8,62 g 4-[N-Methyl-N-(11-hydroxyundecyl)-amino]-benzaldehyd, 4,33 g 4-Nitrophenyl-hydrazin und 25 ml Eisessig wurden während 30 Minuten auf Rückflußtemperatur erhitzt und über Nacht bei Raumtemperatur stehengelassen. Die resultierende Reaktionsmischung wurde mit 70 ml Eiswasser versetzt und gut durchgerührt. Nach dem Entfernen des Wassers aus der Reaktionsmischung wurde das inzwischen ausgefallene Reaktionsprodukt abgetrennt und hiernach durch Aufkochen mit Aktivkohle in Aceton vorgereinigt. Das vorgereinigte Produkt wurde dann mittels Flash-Chromatographie auf Kieselgel gereinigt, wobei als Laufmittel ein Gemisch aus Hexan und Essigester im Volumenverhältnis von 6:4 verwendet wurde. Insgesamt wurden 3,4 g des 4'-N-Methyl-N-(11-hydroxyundecyl)-amino]-benzaldehyd-4-nitro-phenylhydrazons erhalten, was einer Ausbeute von 28 % der Theorie entsprach. Als KBr-Pressling wies dieses Produkt in seinem IR-Spektrum Banden bei 3400, 3250, 1585, 1510, 1490, 1460, 1320, 1290, 1270, 1170, 1100, 830 und 810 $cm^{-1}$ auf.

4. Die Herstellung von 4'-[N-Methyl-N-(11-methacryloyloxyundec-1-yl)-amino]-benzaldehyd-4-nitro-phenylhydrazon
4,51 g 4'-[N-Methyl-N-(11-hydroxyundecyl)-amino]-benzaldehyd-4-nitrophenylhydrazon wurden in 40 ml Chloroform vorgelegt. Zu dieser Lösung wurden 1,14 g Triethylamin und 1,21 g Methacrylsäurechlorid in jeweils 10 ml Chloroform zugetropft. Anschließend wurde die resultierende Reaktionsmischung mit Hydrochinonmonomethylether als Stabilisator versetzt und danach während 7 Stunden auf Rückflußtemperaturen erhitzt. Danach wurden noch etwas Triethylamin und Methacrylsäurechlorid nachdosiert, so daß ein 10 mol-%iger Überschuß an diesen beiden Reaktanden resultierte. Hiernach wurde die Reaktionsmischung noch weitere 6 Stunden auf Rückflußtemperaturen erhitzt. Nach dem Abkühlen auf

Raumtemperatur wurde die Reaktionsmischung mit 150 ml Wasser versetzt. Die organische Phase wurde von der wäßrigen Phase abgetrennt und dreimal mit jeweils 40 ml Wasser, dreimal mit jeweils 30 ml 10 %iger Natriumhydrogencarbonatlösung und dann wieder mit 30 ml Wasser gewaschen und mit Natriumsulfat getrocknet. Nach dem Abtrennen des Natriumsulfats wurde die organische Phase eingedampft. War nach dem IR-Spektrum der Umsatz noch nicht vollständig gewesen, wurde der Rückstand nochmals den vorstehend beschriebenen Reaktionsbedingungen unterworfen.

Nach dem Entfernen des Lösungsmittels aus dem Rückstand wurde dieser durch Flash-Chromatographie auf Kieselgel mit einem Lösungsmittelgemisch aus Essigester und Hexan im Volumenverhältnis von 3:7 gereinigt und dann aus einem Lösungsmittelgemisch aus Heptan und Dioxan im Volumenverhältnis von 95:5 umkristallisiert.

Es wurden 1,52 g 4'-[N-Methyl-N-(11-hydroxyundecyl)-amino]-benzaldehyd-4-nitro-phenylhydrazon erhalten. Das Produkt wies die folgenden physikalischen Eigenschaften auf: IR-Spektrum (KBr-Pressling): Banden bei 3260, 2900, 2850, 1700, 1590, 1510, 1495, 1470, 1320, 1300, 1275, 1180, 1110, 840 und 810 $cm^{-1}$; $^1H$-Kernresonanzspektrum (400 MHz, $CDCl_3$, Tetramethylsilan als interner Standard), chemische Verschiebung $\delta$ (in ppm): 1,3 - 1,6 (Muliplett, 18 H), 1,9 (Singulett, 3 H), 3,0 (2 H, nicht aufgelöst), 3,36 (2 H, nicht aufgelöst), 4,1 (Triplett, 2 H), 5,5 (Singulett, 1 H), 6,1 (Singulett, 1 H), 6,6 (Doublett, 2 H), 7,1 (Doublett, 2 H), 7,5 (Doublett, 2 H), 7,7 (Singulett, 1 H), 8,15 (Doublett 2 H).

Die chemisch ermittelte Elementarzusammensetzung entsprach den theoretischen Berechnungen: berechnet: 68,5 % C, 7,9 % H, 11,0 % N und 12,6 % O; gefunden: 67,9 % C, 8,2 % H, 10,2 % N und 13,0 % O.

5. Die Herstellung des erfindungsgemäßen Methacrylat-Copolymerisats

0,4 g 4'-[N-Methyl-N-(11-methacryloyloxyundec-1-yl)-amino]-benzaldehyd-4-nitro-phenylhydrazon und 0,266 g n-Octadecylmethacrylat wurden mit 0,007 g Azo-bis-isobutyronitril in 15 ml analysenreinem Toluol gelöst. Die resultierende Lösung wurde durch Einleiten von Stickstoff entgast und hiernach unter Stickstoff bei 70 °C 72 Stunden gerührt, wobei während dieser Zeit neunmal jeweils 0,007 g Azo-bis-isobutyronitril nachdosiert wurden. Der Ablauf der Reaktion wurde mit Hilfe der Gelpermeationschromatographie verfolgt. Nach Beendigung der Polymerisation wurde die Lösung filtriert, und das Filtrat wurde auf ca. 3 ml eingeengt. Hiernach wurde das erfindungsgemäße Methacrylat-Copolymerisat in Methanol ausgefällt und mit Methanol noch zweimal aus Toluol umgefällt. Es wurden 0,38 g des erfindungsgemäßen Methacrylat-Copolymerisats erhalten. Es wies ein zahlenmittleres Molekulargewicht $\overline{M}_n$ von 7500 auf.

Das erfindungsgemäße Methacrylatcopolymerisat war leicht zu verarbeiten, als dünner Film transparent, homogen und laserstabil und es war hervorragend für die Herstellung von Langmuir-Blodgett-Schichten geeignet.

Beispiele 6 bis 8

Die Herstellung erfindungsgemäßer Langmuir-Blodgett-Schichten nach der Langmuir-Blodgett-Technik.

Für die Durchführung der Beispiele 6 bis 8 wurde das erfindungsgemäße Methacrylat-Copolymerisat des Beispiels 2 verwendet.

Beispiel 6

Die Herstellung einer erfindungsgemäßen Langmuir-Blodgett-Multischicht aus dem Methacrylat-Copolymerisat; Versuchsvorschrift:

Eine Lösung der Konzentration 1 mg/ml des Copolymerisats in reinem Chloroform wurde auf der Oberfläche eines Langmuir-Troges ausgebreitet. Durch Erhöhung des Flächendrucks mittels einer beweglichen Barriere wurde eine kristalline monomolekulare Schicht erhalten. Bei einem Flächendruck von 25 mN/m wurde die kristalline monomolekulare Schicht durch vertikales Ein- und Austauchen eines gereinigten Silicumplättchens auf dessen Oberfläche übertragen. Hierbei lag die Tauchgeschwindigkeit bei 4 mm/min, und die kristalline monomolekulare Schicht wurde in "Y-deposition" mit einem Übertragungsverhältnis von nahezu 1,0 übertragen.

Dieser Vorgang wurde mehrmals wiederholt, so daß eine Langmuir-Blodgett-Multischicht resultierte, deren in üblicher und bekannter Weise ellipsometrisch ermittelte Dicke linear mit der Zahl der übertragenen Monoschichten anstieg.

Beispiel 7

Die Herstellung einer erfindungsgemäßen Langmuir-Blodgett-Multischicht, welche Langmuir-Blodgett-Monoschichten aus dem Methacrylat-Copolymerisat und aus einem polymeren Amphiphil in alternierender Folge enthält.

Versuchsvorschrift:

Beispiel 6 wurde wiederholt, nur daß nach jedem Auftragen einer kristallinen monomolekularen Schicht aus dem Copolymerisat eine kristalline monomolekulare Schicht aus dem polymeren Amphiphil

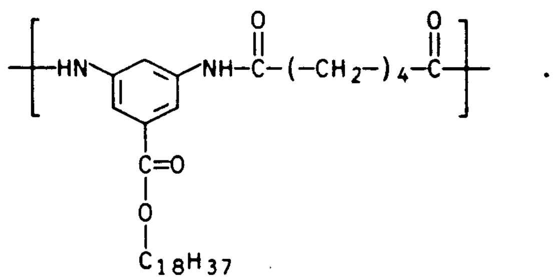

in "Y-deposition" übertragen wurde.

Beispiel 8

Die Herstellung einer erfindungsgemäßen Langmuir-Blodgett-Multischicht, welche Langmuir-Blodgett-Monoschichten aus dem Methacrylat-Copolymerisat und aus einem niedermolekularen Amphiphil in alternierender Folge enthält; Versuchsvorschrift:
Beispiel 7 wurde wiederholt, nur daß anstelle des polymeren Amphiphils Tricosensäure verwendet wurde.

Die nach den Beispielen 6 bis 8 hergestellten erfindungsgemäßen Langmuir-Blodgett-Multischichten waren von vorzüglicher Qualität und wiesen eine gleichmäßige Dicke und so gut wie keine Schichtfehler auf. Sie waren alle ausgesprochen stabil gegenüber intensiver Laserstrahlung. Von den hergestellten Langmuir-Blodgett-Multischichten waren aufgrund ihrer nichtlinear optischen Eigenschaften die des Beispiels 6 gut, die des

Beispiels 8 besonders gut und die des Beispiels 7 ganz besonders gut als nichtlinear optische Materialien für nichtlinear optische Anordnungen geeignet. Bei den erfindungsgemäßen Langmuir-Blodgett-Multischichten des Beispiels 7 kam noch hinzu, daß sie mechanisch ausgesprochen stabil waren.

Beispiele 9 bis 14

Die Herstellung erfindungsgemäßer Langmuir-Blodgett-Schichten nach der Langmuir-Blodgett-Technik
Für die Durchführung der Beispiele 9 und 10 wurde das erfindungsgemäße Methacrylat-Copolymerisat des Beispiels 3 verwendet.

Für die Durchführung der Beispiele 11 und 12 wurde das erfindungsgemäße Methacrylat-Copolymerisat des Beispiels 4 verwendet.

Für die Durchführung der Beispiele 13 und 14 wurde das erfindungsgemäße Methacrylat-Copolymerisat des Beispiels 5 verwendet.

Die erfindungsgemäßen Langmuir-Blodgett-Multischichten der Beispiele 9 bis 14 wurden gemäß der bei Beispiel 6 angegebenen allgemeinen Versuchsvorschrift hergestellt, nur daß die Temperatur des Langmuir-Troges bei 15 °C lag und daß bei den Beispielen 9, 11 und 13 ein Flächendruck von 20 mN/m und bei den Beispielen 10, 12 und 14 ein Flächendruck von 22 mN/m angewandt wurde.

Die in üblicher und bekannter Weise ellipsometrisch ermittelte Dicke der erfindungsgemäßen Langmuir-Blodgett-Multischichten stieg linear mit der Zahl der übertragenen Monoschichten an.

Auch die nach den Beispielen 9 bis 14 hergestellten erfindungsgemäßen Langmuir-Blodgett-Multischichten waren von vorzüglicher Qualität und wiesen eine gleichmäßige Dicke und so gut wie keine Schichtfehler auf. Sie waren alle ausgesprochen stabil gegenüber intensiver Laserstrahlung und waren deshalb hervorragend als nichtlinear optische Materialien für nichtlinear optische Anordnungen geeignet.

## Patentansprüche

**1.** (Meth)Acrylat-Copolymerisate, welche

A) mindestens ein (Meth)Acrylat und/oder (Meth)Acrylamid der allgemeinen Formel I mit nichtlinear optischen Eigenschaften zweiter Ordnung,

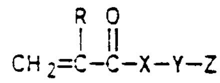

(I)

worin die Variablen die folgende Bedeutung haben:

- R Wasserstoffatom oder Methylgruppe;
- X gegebenenfalls vorhandener abstandshaltender flexibler Molekülteil (Spacer);
- Y zweiwertige Gruppe mit Elektronendonorwirkung;
- Z nicht-zentrosymmetrischer, ein leicht polarisierbares konjugiertes $\pi$-Elektronensystem sowie mindestens eine endständige Nitro-, Trifluormethyl-, Cyano- oder Fulven-6-yl-gruppe als Elektronenakzeptorgruppe enthaltender Rest;

und

B) mindestens ein (Meth)Acrylat eines Alkanols mit 10 bis 30 Kohlenstoffatomen im Alkylrest

einpolymerisiert enthalten, wobei das Molverhältnis (A):(B) bei 1:0,5 bis 1:5 liegt.

**2.** (Meth)Acrylat-Copolymerisate nach Anspruch 1, dadurch gekennzeichnet, daß die Länge der Alkylesterreste (-COO-Alkyl) der (Meth)Acrylate (B) in etwa gleich oder gleich der Länge der Reste -CO-X-Y-Z oder -CO-Y-Z der (Meth)Acrylate und/oder (Meth)Acrylamide (A) der allgemeinen Formel I ist.

**3.** (Meth)Acrylat-Copolymerisate nach einem der Ansprüche 1 oder 2, dadurch gekennzeichnet, daß sie ausschließlich mindestens ein (Meth)Acrylat oder (Meth)Acrylamid (A) und mindestens ein (Meth)-Acrylat (B) einpolymerisiert enthalten.

**4.** Verwendung der (Meth)Acrylat-Copolymerisate gemäß einem der Ansprüche 1 bis 3 als nichtlinear optische Materialien.

**5.** Verwendung der (Meth)Acrylat-Copolymerisate gemäß einem der Ansprüche 1 bis 3 zur Herstellung von Langmuir-Blodgett-Schichten.

**6.** Nichtlinear optische Materialien, welche entweder die (Meth)Acrylat-Copolymerisate gemäß einem der Ansprüche 1 bis 3 enthalten oder welche hieraus bestehen.

**7.** Langmuir-Blodgett-Schichten, in welchen die schichtaufbauenden Gruppen und/oder Moleküle insgesamt einheitlich räumlich ausgerichtet sind und von welchen mindestens eine die (Meth)Acrylat-Copolymerisate gemäß einem der Ansprüche 1 bis 3 enthaltende oder hieraus bestehende kristalline monomolekulare Langmuir-Blodgett-Schicht aufweist.

**8.** Nichtlinear optische Anordnung, welche mindestens einen Träger und mindestens eine Schicht aufweist, die die (Meth)Acrylat-Copolymerisate gemäß einem der Ansprüche 1 bis 3 enthält oder die hieraus besteht.

**9.** Nichtlinear optische Anordnung, welche mindestens einen Träger und mindestens eine Langmuir-Blodgett-Schicht gemäß Anspruch 7 enthält.

**10.** Verfahren zur einheitlichen räumlichen Ausrichtung organischer Reste, dadurch gekennzeichnet, daß man hierbei zunächst

(1) ein (Meth)Acrylat-Copolymerisat gemäß einem der Ansprüche 1 bis 3 herstellt, welches man dann

(2) in an sich bekannter Weise zu mindestens einer kristallinen monomolekularen Langmuir-Blodgett-Schicht formt.

**11.** Das Verfahren nach Anspruch 10, dadurch gekennzeichnet, daß man den Verfahrensschritt (2) in einem elektrischen und/oder magnetischen Feld der geeigneten räumlichen Ausrichtung und des geeigneten Vorzeichens ausführt.

**12.** Das Verfahren nach Anspruch 10 oder 11, dadurch gekennzeichnet, daß die kristalline monomolekulare Langmuir-Blodgett-Schicht nach ihrer Herstellung einem elektrischen und/oder magnetischen Feld der geeigneten räumlichen Ausrichtung und des geeigneten Vorzeichens ausgesetzt wird.

**13.** Das Verfahren nach einem der Ansprüche 10 bis 12, dadurch gekennzeichnet, daß die kristalline monomolekulare Langmuir-Blodgett-Schicht dem Zonenschmelzen oder der Rekristallisation unterworfen wird.

**Claims**

**1.** A (meth)acrylate copolymer which contains, as polymerized units,

A) one or more (meth)acrylates and/or (meth)acrylamides having second order nonlinear optical properties and of the formula I

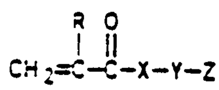

(I)

where R is hydrogen or methyl, X is a flexible spacer, which may or may not be present, Y is a divalent group having electron donor activity and Z is a noncentrosymmetric radical containing an easily polarizable conjugated $\pi$-electron system and one or more terminal nitro, trifluoromethyl, cyano or fulven-6-yl groups as electron acceptor groups,

and

B) one or more (meth)acrylates of alkanols where the alkyl radical is of 10 to 30 carbon atoms, the molar ratio of (A) to (B) being from 1:0.5 to 1:5.

**2.** A (meth)acrylate copolymer as claimed in claim 1, wherein the length of the alkyl ester radicals (-COO-alkyl) of the (meth)acrylates (B) is roughly equal to or equal to the length of the radicals -CO-X-Y-Z or -CO-Y-Z of the (meth)acrylates and/or (meth)acrylamides (A) of the formula I.

**3.** A (meth)acrylate copolymer as claimed in claim 1 or 2, which contains exclusively one or more (meth)-acrylates or (meth)acrylamides (A) and one or more (meth)acrylates (B) as polymerized units.

**4.** Use of a (meth)acrylate copolymer as claimed in claim 1 or 2 or 3 as a nonlinear optical material.

**5.** Use of a (meth)acrylate copolymer as claimed in claim 1 or 2 or 3 for the production of Langmuir-Blodgett films.

**6.** A nonlinear optical material which either contains or consists of a (meth)acrylate copolymer as claimed in claim 1 or 2 or 3.

**7.** Langmuir-Blodgett films in which the film-forming groups and/or molecules are all uniformly spatially oriented and of which at least one comprises the crystalline monomolecular Langmuir-Blodgett film containing or consisting of the (meth)acrylate copolymer as claimed in claim 1 or 2 or 3.

**8.** A nonlinear optical arrangement which has one or more substrates and one or more films which contain or consist of the (meth)acrylate copolymer as claimed in claim 1 or 2 or 3.

**9.** A nonlinear optical arrangement which contains one or more substrates and one or more Langmuir-Blodgett films as claimed in claim 7.

**10.** A process for the uniform spatial orientation of organic radicals, wherein first

(1) a (meth)acrylate copolymer as claimed in claim 1 or 2 or 3 is prepared and said copolymer is then
(2) formed in a conventional manner into one or more crystalline monomolecular Langmuir-Blodgett films.

**11.** A process as claimed in claim 10, wherein process step (2) is carried out in an eletrical and/or magnetic field of suitable spatial orientation and of suitable sign.

**12.** A process as claimed in claim 10 or 11, wherein the crystalline monomolecular Langmuir-Blodgett film is produced and then exposed to an electric and/or magnetic field of suitable spatial orientation and of suitable sign.

**13.** A process as claimed in claim 10 or 11 or 12, wherein the crystalline monomolecular Langmuir-Blodgett film is subjected to zone melting or to recrystallization.

**Revendications**

**1.** Copolymères de (méth)acrylates contenant à l'état polymérisé, à un rapport molaire A:B de 1 / 0,5 à 1,5
A) au moins un (méth)acrylate et/ou (méth)acrylamide de formule générale I à propriétés optiques non linéaires de second ordre,

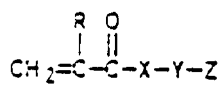

(I)

dans laquelle les symboles ont le significations suivantes :
R représente un atome d'hydrogène ou un groupe méthyle,
X représente une partie de molécule flexible, maintenant une distance (spacer), éventuellement présente ;
Y représente un groupe divalent ayant des propriétés de donateur d'électrons ;
Z représente un radical non-centrosymétrique contenant un système conjugué facilement polymérisable à électrons $\pi$ et au moins un groupe terminal nitro, trifluorométhyle, cyano ou fulvène-6-yle en tant que groupe accepteur d'électrons ;
et
B) au moins un (méth)acrylate d'un alcanol contenant 10 à 30 atomes de carbone dans le groupe alkyle.

**2.** Copolymères de (méth)acrylates selon la revendication 1, caractérisés en ce que la longueur des radicaux ester alkylique (-COO-alkyle) des (méth)acrylates B) est à peu près égale ou égale à la longueur des radicaux -CO-X-Y-Z ou -CO-Y-Z des (méth)acrylates et/ou (méth)acrylamides A) de formule générale I.

**3.** Copolymères de (méth)acrylates selon une des revendications 1 ou 2, caractérisés en qu'ils contiennent exclusivement au moins un (méth)acrylate ou (méth)acrylamide A) et au moins un (méth)acrylate B) à l'état polymérisé.

**4.** Utilisation des copolymères de (méth)acrylates selon une des revendications 1 à 3 en tant que matières optiques non linéaires.

**5.** Utilisation des copolymères de (méth)acrylates selon une des revendications 1 à 3, pour la formation de couches de Langmuir-Blodgett.

**6.** Matériaux optiques non linéaires consistant en totalité ou en partie en copolymères de (méth)acrylates selon une des revendications 1 à 3.

**7.** Couches de Langmuir-Blodgett dans lesquelles les groupes et/ou molécules formant les couches ont tous la même orientation dans l'espace et dont l'une au moins est une couche cristalline monomoléculaire de Langmuir-Blodgett consistant en totalité ou en partie en les copolymères de (méth)acrylates selon une des revendications 1 à 3.

**8.** Dispositif optique non linéaire comprenant au moins un support et au moins une couche consistant en totalité ou en partie en les copolymères de (méth)acrylates selon une des revendications 1 à 3.

**9.** Dispositif optique non linéaire contenant au moins un support et/ou au moins une couche de Langmuir-Blodgett selon la revendication 7.

**10.** Procédé pour orienter uniformément dans l'espace des radicaux organiques, caractérisé en ce que :
(1) on prépare d'abord un copolymère de (méth)acrylates selon une des revendications 1 à 3,
(2) à partir duquel on forme, de manière connue en soi, au moins une couche cristalline monomoléculaire de Langmuir-Blodgett.

**11.** Le procédé selon la revendication 10, caractérisé en ce que l'opération (2) est réalisée dans un champ électrique et/ou magnétique ayant l'orientation appropriée dans l'espace et le signe approprié.

**12.** Le procédé selon la revendication 10 ou 11, caractérisé en ce que la couche cristalline monomoléculaire de Langmuir-Blodgett, après sa formation, est exposée à un champ électrique et/ou magnétique ayant l'orientation appropriée dans l'espace et le signe approprié.

**13.** Le procédé selon une des revendications 10 à 12, caractérisé en ce que la couche cristalline monomoléculaire de Langmuir-Blodgett est soumise à la fusion par zones ou a la recristallisation.